# EUROPEAN PATENT APPLICATION

(11) **EP 1 792 964 A1**
(43) Date of publication of application: **06.06.2007**
(21) Application number: 05111507.9
(22) Date of filing: 30.11.2005
(51) Int. Cl.: C09K 11/08, C09K 11/77, C09K 11/85, G21K 4/00

(54) **Improved synthesis of precursors for preparing storage phosphors.**

(71) Applicant: Agfa HealthCare NV, 2640 Mortsel (BE)
(72) Inventor: Tahon, Jean-Pierre ,c/o AGFA-GEVAERT, Septestraat 27, 2640 Mortsel (BE); Leblans, Paul ,c/o AGFA-GEVAERT, Septestraat 27, 2640 Mortsel (BE); Escard, Marcelle ,c/o AGFA-GEVAERT, Septestraat 27, 2640 Mortsel (BE)
(74) Representative: Theunis, Patrick

(57) **Abstract**

In a method for producing precursor compounds suitable for use in the production of a europium doped cesium halide photostimulable phosphor at least one of the steps essentially makes use of an ammonium halide salt.

## Description

### FIELD OF THE INVENTION

The present invention relates to an improved method in the preparation of cesium europium bromide precursor complexes as an intermediate step in the preparation of CsBr:Eu phosphors.

### BACKGROUND OF THE INVENTION

A well known use of storage phosphors is in the production of X-ray images. In US-A-3 859 527 a method for producing X-ray images with a photostimulable phosphor, incorporated in a phosphor panel, is disclosed. The panel is exposed to an incident pattern-wise modulated X-ray beam and as a result thereof the phosphor temporarily stores energy contained in the X-ray radiation pattern. At some interval after the exposure, a beam of visible or infra-red light scans the panel in order to stimulate the release of stored energy as light that is detected and converted to sequential electrical signals which are processed to produce a visible image. For this purpose, the phosphor should store as much as possible of the incident X-ray energy and emit as little as possible of the stored energy until stimulated by the scanning beam. This is called "digital radiography" or "computed radiography".

The image quality that is produced by any radiographic system using a phosphor screen, thus also by a digital radiographic system, largely depends on the construction of the phosphor screen. Generally, the thinner a phosphor screen at a given amount of absorption of X-rays, the better the image quality will be.

This means that the lower the ratio of binder to phosphor of a phosphor screen, the better the image quality, attainable with that screen, will be. Optimum sharpness can thus be obtained when screens without any binder are used. Such screens can be produced, e.g., by physical vapour deposition, which may be thermal vapour deposition, sputtering, electron beam deposition or other of phosphor material on a substrate. However, this production method can not be used to produce high quality screens with every arbitrary phosphor available. The mentioned production method leads to the best results when a phosphor is used the crystals of which melt congruently.

The use of alkali metal halide phosphors in storage screens or panels is well known in the art of storage phosphor radiology and congruent melting of these phosphors makes it possible to manufacture structured screens and binderless screens.

It has been disclosed that when binderless screens with an alkali halide phosphor are produced, it is beneficial to have the phosphor crystal deposited as some kind of piles, needles, tiles, or other related forms. So in US-A-4 769 549 it is disclosed that the image quality of a binderless phosphor screen can be improved when the phosphor layer has a block structure, shaped in fine pillars.

In US-A-5 055 681 a storage phosphor screen comprising an alkali halide phosphor in a pile-like structure is disclosed. The image quality of such screens still needs to be increased and in JP-A-06/230 198 it is disclosed that the surface of the screen with pillar like phosphors is rough and that a levelling of that surface can increase the sharpness. In US-A-5 874 744 the attention is drawn to the index of refraction of the phosphor used in order to produce the storage phosphor screen with a needle-like or pillar-like phosphor.

In EP-A-1 113 458 a binderless storage phosphor screen is disclosed that comprises an alkali metal storage phosphor characterised in that said screen shows an XRD-spectrum with a (100) diffraction line having an intensity I₁₀₀ and a (110) diffraction line having an intensity I₁₁₀, so that I₁₀₀/I₁₁₀ ≥ 1. Such a phosphor screen shows a better compromise between speed and sharpness.

Upon excitation with high energy radiation, excitons or electron/hole pairs are created in prompt emitting phosphors and scintillators. In the subsequent recombination of an electron and a hole, energy is released which is used for the creation of a luminescent photon, i.e. for the luminescence process. The presence of defects in the phosphor material gives rise to additional energy levels in the band gap. As a consequence, electrons can de-excite in many small steps. The resulting energy packets are too small to give rise to photon emission. Instead thereof the energy is transformed in so-called phonons or lattice vibrations. I.e. the excitation energy is lost in the form of heat.

In a similar way as in prompt emitting phosphors, high energy radiation creates electron-hole pairs in storage phosphors. In these materials, many electron-hole pairs do not recombine directly. Instead thereof the electrons are trapped in electron traps and the holes are trapped in hole traps. Upon subsequent stimulation of the storage phosphor with light in the longer wavelength range as e.g. red light, the trapped electrons can absorb a photon. The photon supplies sufficient energy in order to escape from the trap. Such an escape is followed by recombination with a hole and by stimulated luminescence.

The traps in a storage phosphor are often intrinsic lattice defects. E.g. in alkaline earth halide and alkali halide storage phosphors, the electrons are trapped in halide vacancies, which are thus transformed into F-centres. If the storage phosphor crystal lattice is contaminated with foreign elements, additional defects are created. These defects can poison the luminescence as in a prompt emitting phosphor. In addition, these defects can compete with the intrinsic lattice defects as electron trapping centres. The additional defects are generally too unstable to be useful for long-term energy storage or too stable, so that the electrons are not released upon stimulation.

So, for prompt emitting phosphors and even more so for storage phosphors, it is of the utmost importance to avoid contamination with foreign elements.

Moreover high moisture content in the raw mix may cause troubles as bumping of the evaporation source which may occur as unacceptable inhomogeneities of the screens afterwards, while evaluating the quality thereof.

Many contaminations can be avoided by using very pure substances in the phosphor synthesis process. Other contaminations are more difficult to prevent.

Alkali halide and alkaline earth halide phosphors are often contaminated with oxides. The origin of this contaminating element may be water, adsorbed at the surface of the often slightly hygroscopic salt particles, more particularly at the surface of the Eu-compound derivatives. In the synthesis of the CsBr:Eu storage phosphor according to the state-of-the art methods the dopant material is often recognised as the source of oxygen contamination.

In EP-A 1 276 117 synthesis of CsBr:Eu starting from CsBr and a Europium compound selected from the group consisting of Eu(II)halides, Eu(III) halides and Eu-oxyhalides is described as an improvement over using Eu₂O₃ as a dopant material. It is clear that use of the above mentioned dopant compounds reduces the amount of the oxygen in the reaction mixture.

Yet, even use of europium halide EuXₙ (2≤n≤3) or europium oxyhalide (EuOX) may entail oxygen contamination. In the case
wherein EuOX (X representing a halide) is used it is clear that oxide contamination will take place to a certain extent. As EuOX decomposes at a temperature of 700°C or more (which represents a temperature, exceeding the melting temperature of CsBr:Eu with at least 100°C) it is clear that the vaporisation process lacks for a "one phase" process from its initial step and that, when all of the starting materials are mixed in only one crucible, a phase separation occurs, further provoking instability in the vapour deposition process, the more as this phenomenon also causes bumping during said evaporation process and inhomogeneous deposit onto the phosphor support. A solution could be sought by strict separation of the raw stock materials in several (at least two) crucibles followed by vaporisation of raw materials or precursors from 2 crucibles or boats for the preparation of the dedicated phosphor, in such a manner that the resulting phosphor satisfies the stoichiometric requirements. Such a solution however requires strict geometrical arrangements within the vapour deposition chamber, and this may lay burden on the reproducibility of the process as the evaporation of the Cs-compounds and Eu-compounds proceeds after melting at differing temperatures.

Furtheron, even if a EuXₙ (2≤n≤3) material, without "structural" presence of oxygen at first sight is used, oxygen contamination will however take place, unless very strict precautions are taken.

EuXₙ (2≤n≤3) compounds are known to be very hygroscopic. EuBr₃ for instance is commercially available only as EuBr₃.6-9H₂O, with an undefined number of water molecules bound as "crystal water". When this material is heated, hydrolysis will take place and EuOBr is formed.

In order to avoid hydrolysis, dehydration must be complete, because presence of 1 molecule of water per molecule of EuBr₃ is sufficient for complete transformation into EuOBr and HBr. Similar problems exist with other europium halides.

Hydrolysis and subsequent transformation into europium oxyhalide can be avoided if europium halide is heated to a temperature not higher than 200°C under reduced pressure for a long time. For significant quantities, however, this process may take days or may even impossible to complete.

The resulting dehydrated europium halide will take up water, however, as soon as it is exposed to ambient atmosphere. This means that mixing with the CsBr matrix material must take place in a glove box or in a room with a conditioned, completely dry atmosphere. Also during transfer of the material to the reaction environment as e.g. a furnace to make powder CsBr:Eu or a vacuum chamber to make a CsBr:Eu phosphor layer by vapour deposition, precautions should be taken in order to avoid water take up.

Alternatively, the water containing raw mix, consisting of CsBr and dehydrated EuXₙ (2≤n≤3) can be dried in the reaction environment as in the furnace for production of CsBr:Eu powder or in the vacuum chamber for the production of CsBr:Eu layers by vapour deposition.

So in issued US-A-6,875,990, in the corresponding EP-A-1 217 633 and in EP-A-1 276 117 europium compounds are expressed by EuBrx in which x satisfies the condition of 2.0 ≤ x ≤ 2.3.
In the PCT-filed WO-A-01/03156, a CsX:Eu phosphor screen has been prepared comprising as preparation steps: mixing or combining CsX with between 10⁻³ mol % and 5 mol % of a europium compound, as, e.g., with EuBr₃ as starting raw material providing the europium dopant or activator, followed by vapour depositing that mixture onto a substrate and forming a binderless phosphor screen.

However drying a raw mix in a furnace is very time-consuming or even impossible, because the water must diffuse through a thick powder layer. Even for a limited thickness of the powder layer, the drying process may require several days, making the phosphor synthesis process very time consuming and inefficient.

When the raw mix is dried in the vacuum chamber in which vapour deposition should take place, a large amount of water vapour will be set free. This will disturb the vacuum and cause corrosion. Water will be readily adsorbed at the vacuum chamber walls and removal of the adsorbed water will again remain very time consuming.

In order to provide a method for manufacturing a europium halide molten and solidified body of high purity useful as a raw material for vapour deposition in particular, a method has been described in JP-A 2003-201119, wherein in the method for manufacturing the europium halide molten and solidified body, europium halide is molten by heating and then is cooled in the presence of a halogen source as e.g. ammonium halide as a salt, or a halogen as such, preferably under an atmosphere of dried air. In the presence of such compounds however corrosion may occur of environmental materials. Dryness processing during a heating time from 1 to 10 hours at temperatures up to 400°C under vacuum moreover takes quite a lot of time.

Besides problems related with hygroscopy, corrosion, purity of the starting materials is not unambiguously provided as many undefined oxides may be present in different ratio amounts and as moreover presence in crucibles of differing undefined "phases" may give rise to sputtering or bumping while vaporising the starting materials so that an unstable vapour flow and a non-uniform deposition may occur.

A first attempt in order to provide an improved method for producing CsX:Eu stimulable phosphors and screens or panels provided with said phosphors as powder phosphors or vapour deposited needle-shaped phosphors suitable for use in image forming methods for recording and reproducing images of objects made by high energy radiation has been described in EP-A-1 548 086 and in the corresponding US-Application 2005/0181119, wherein said CsX:Eu stimulable phosphors are essentially free from oxygen in their crystal structure, and wherein X represents a halide selected from the group consisting of Br, Cl and combinations thereof, and wherein the method further comprises the steps of mixing CsX with a compound or combinations of precursor compounds having as a composition CsₓEu_{y}X'_{x+αy}, wherein the ratio of x to y exceeds a value of 0.25,
wherein α ≥ 2 and wherein X' is a halide selected from the group consisting of Cl, Br and I and combinations thereof; heating said mixture at a temperature above 450 °C; cooling said mixture, and optionally annealing and recovering said CsX:Eu phosphor.

Furtheron in EP-A-1 568 751 and in the corresponding US-Application 2005/0186329, a method has been described making use of starting compounds (precursors) or combinations of precursors for the synthesis of said CsX:Eu stimulable phosphors, said precursors (starting compounds) having as a composition CsₓEu_{y}X'_{x+αy}, wherein the ratio of x to y exceeds a value of 0.25, wherein α > 2 and
wherein X' is a halide selected from the group consisting of Cl, Br and I and combinations thereof; heating said mixture at a temperature above 450 °C; cooling said mixture, and optionally annealing and recovering said CsX:Eu phosphor.

Otherwise in EP-A-1 568 752 and in the corresponding US-Application 2005/0184271, said method further comprises the steps of mixing CsX with a compound or combinations of compounds having as a composition CsₓEu_{y}X'_{x+αy}, wherein the ratio of x to y exceeds a value of 0.25, wherein α ≥ 2 and wherein X' is a halide selected from the group consisting of Cl, Br and I and combinations thereof; heating said mixture at a temperature above 450 °C; cooling said mixture, and, optionally, annealing and recovering said CsX:Eu phosphor.

Drawbacks in the synthesis of cesium europium halide precursors set forth above are related with presence of water and, as a consequence thereof, with the formation of EuOX during that synthesis.

### SUMMARY OF THE INVENTION

A solution for reducing the production of europium oxyhalides in form of EuOX as an undesired side-reaction product, and more particularly for reducing the production of undesired EuOBr during that synthesis, has been found to result from a synthesis of cesium europium halide precursors, wherein use is made, in a particular step of that synthesis of ammonium halide, and more particularly ammonium bromide as set out in claim 1. Specific features for preferred embodiments of the invention are set out in the dependent claims. Further advantages and embodiments of the present invention will become apparent from the following description.

### DETAILED DESCRIPTION OF THE INVENTION

It has unexpectedly been found that presence of ammonium halide salt(s) in the synthesis of cesium europium halide precursor complexes as precursors for further production of cesium halide phosphors doped with europium, has a particularly advantageous effect, in that occurrence of europium oxyhalides in that synthesis is remarkably reduced.

According to the present invention the method for producing precursor compounds suitable for use in the production of europium doped cesium halide photostimulable phosphors is characterised in that at least one of the steps essentially makes use of an ammonium halide salt.

So in the method according to the present invention, besides the steps of mixing a cesium halide salt with a trivalent europium halide salt in a homogenising step, followed by drying a solution thereof under vacuum evaporation in order to form a powdery composition, the following step essentially makes use of an ammonium halide salt, in that mixing said powdery composition proceeds with an excess of an ammonium halide salt, before heating said mixture, following a dedicate temperature profile in a dedicate atmosphere before cooling said precursor compounds.

In a further embodiment in the method according to the present invention said precursor compounds having as a composition CsₓEu_{y}X'_{x+αy}, wherein x/y > 0.25, wherein α ≥ 2 and wherein X' is a halide selected from the group consisting of Cl, Br and I and combinations.

According to the method of the present invention said method proceeds by the steps of mixing CsX with EuX₃ in a homogenising step, followed by adding demineralised water, wherein X is a halide selected from the group consisting of Cl, Br and I and combinations thereof;
- drying said solution under vacuum evaporation to a powdery composition;
- mixing said powdery composition with NH₄X', wherein X' is a halide selected from the group consisting of Cl, Br and I and combinations thereof;
- heating said mixture while following a dedicate temperature profile comprising at least one or more step(s) changing temperature up to 350 °C, and one or more step(s) further increasing said temperature above 350 °C; wherein at least said step(s) up to 350 °C are performed in an inert atmosphere; followed by
- cooling said mixture.

It is preferred in the step of adding demineralised water that this step proceeds until formation of a clear solution.

In the method according to the present invention, changing temperatures, e.g. when temperatures should be increased as mentioned hereinbefore, advantageously proceeds at a rate of less than 5°C per minute, more preferably less than 3°C per minute, and even more preferably about 1°C per minute.

According to the method of the present invention the step of heating said mixture above 350°C proceeds in a reducing atmosphere.

According to the method of the present invention said reducing atmosphere is a hydrogen containing inert atmosphere. Therein hydrogen represents at least 1 mole% versus inert gas used therein, more preferably up to 5 mole% and even up to 10 mole%.

According to the method of the present invention said inert atmosphere is an argon or a nitrogen atmosphere.

In another embodiment of the method according to the present invention CsX and EuX₃ are present in equimolar amounts.

Moreover according to the method of the present invention ammonium halide salts and cesium halide salts are present in molar ratios exceeding 1.5:1 and even 2:1, up to 3:1.

According to the present invention the step of recovering a CsX':Eu phosphor is further included, wherein X' is a halide selected from the group consisting of Cl, Br and I and combinations thereof, and wherein X' preferably stands for Br, so that the envisaged CsBr:Eu phosphor is obtained.

In the method according to the present invention, in the raw mix between 10⁻³ and 25 mol % of europium is present with respect total cesium amounts.

In another embodiment according to the method of the present invention, between 10⁻³ and 10 mol % of europium is present with respect to total cesium amounts.

In the particular embodiment in the method according to the present invention when the raw mix is present in only one crucible, in the said raw mix between 10⁻³ and 5 mol %, and, more preferably 3 mole%, of europium is present with respect to total cesium amounts.

In the particular embodiment in the method according to the present invention when the raw mix is present in at least two crucibles, in the raw mix in at least one crucible between 10⁻³ and 80 mol % of europium is present with respect to total cesium amounts.

In the method of the present invention said crucible is, or said crucibles are part of one or more crucible units. A "crucible unit" is defined herein as a configuration wherein, besides a boat or crucible as an essential part to contain "raw materials", all extended parts built up from a refractory material coming into contact with liquified and/or vaporized raw materials are included. As extended parts an optionally present chimney, one or more covers (whether or not perforated or provided with slits), one or more baffle plate(s), shielding or heat-protecting screen(s), flap(s), additional refractory material parts coming into contact with vaporised and/or liquified raw materials and additional parts present within said vapour deposition apparatus coming into contact with vaporised raw materials should be considered. Examples of such additional parts are e.g. thermocouples, required to control local temperatures within a vapour depositing apparatus, when covered with refractory metal material and optionally present cooling and/or heating units steering temperature within the vapour deposition apparatus when made in refractory materials. Excluded therefrom however are the substrate or support whereupon the phosphor should be deposited and the walls of the vapour deposition apparatus. It is clear that the inner surface part within a crucible or boat acting as a container for said "raw materials" in the liquid or molten state and having contact therewith in that state is varying throughout the vapour deposition process as raw materials escape from the crucible(s) in vaporized form, in order to become deposited onto the (cooled) support. "Part of the inner surface" is thus defined as the surface part of the refractory material within the crucible acting as a container for the "raw materials" in the liquid state and having contact therewith in that state, "coming into contact with liquified raw materials in molten state, just before getting evaporated". Raw materials become evaporated through heating under reduced pressure within the vapour deposition apparatus. "Refractory", as a term used herein, expresses "resisting treatment under ordinary or various extraordinary conditions, such as capability of enduring or resisting high temperatures" as in the context of the present invention. "Raw materials", also used herein, are defined as starting products or starting components, present as phosphor precursors, at least comprising a matrix component, an activator component or a precursor containing both said matrix and said activator component or a combination thereof. Said phosphor precursors are used for preparing phosphors by evaporation in a vapour depositing step, once enough energy - in form of heat - is added in order to start vaporization of main, parent or matrix component(s), such as pure alkali halide salt(s) at one side, and pure activator salts, present as oxides, halides and/or oxyhalides, as well as particular precursors (having a composition wherein main component and activator are already present as at least one composition thereof) or combinations of components as mentioned hereinbefore. Said raw materials are normally added to a crucible container or boat, in a solid state and are liquified by heating under reduced pressure, before starting the vaporisation process in the vapour deposition apparatus.

Furthereon according to the present invention a method for producing a binderless phosphor screen or panel advantageously comprises the steps of providing a CsX:Eu phosphor prepared according to the method according to the present invention as described hereinbefore, and depositing said phosphor on a substrate by a method selected from the group consisting of physical vapour deposition, chemical vapour deposition and an atomisation technique.

In a method according to the present invention for producing a binderless phosphor screen or panel on a substrate containing a CsX:Eu stimulable phosphor, wherein X represents a halide selected from the group consisting of Br, Cl and combinations thereof, said method comprising the steps of:
- bringing in a deposition chamber, evacuated to 1 mbar or less and further adding an inert gas thereto, together with said substrate, multiple heatable containers containing CsX and a precursor compound or a combination of precursor compounds having as a composition CsₓEu_{y}X'_{x+αy}, prepared as disclosed before,
- further depositing on said substrate, by a method selected from the group consisting of physical vapour deposition, chemical vapour deposition and an atomisation technique, said CsX:Eu stimulable phosphor,
wherein said precursor compound or a combination of precursor compounds having as a composition CsₓEu_{y}X'_{x+3y} or CsₓEu_{y}X'_{x+2y} is present in such a ratio to CsX that on said substrate a CsX:Eu storage phosphor is formed, wherein Eu is present as a dopant in an amount between 10⁻⁵ and 5 mol%.

As an advantageous effect of the present invention synthesis of cesium europium halide precursors is guaranteed in order to further prepare CsBr:Eu phosphors and storage phosphor panels having such phosphor layers, without formation (or, at least in negligible amounts) of undesired EuOX, as europium oxihalide, and, more particularly, as EuOBr, during that synthesis.

### Examples

While the present invention will hereinafter be described in connection with preferred embodiments thereof, it will be understood that it is not intended to limit the invention to those embodiments. With respect to the experiments set out in the Tables hereinafter the experiment 3102/03/1 was essentially performed in following 2 steps:
- in a first step amounts of EuBr₃ and CsBr were weighed in order to prepare the precursor, and, after homogenising the mixture demineralised water was added until a clear solution was formed that was added to a ROTAVAP^{®} unit in a glass butt installed in a bath of triethylene glycol, heated up to 100°C under vacuum (less than 50 mbar), until the solution was dried and was coloured white to yellow.
- in a second step drying was performed for a time of 5 hours at 60°C, 5 hours at 70°C, 5 hours at 90°C and 5 hours at 110°C under vacuum. Dried product was carefully weighed after cooling and stored in a glovebox under inert gas atmosphere, i.e. under nitrogen.
Furtheron the experiments 5F and 3102/04/1 were essentially performed by the same first step as for experiment 3102/03/1, followed by :
- a second step wherein drying was performed for a time of 5 hours at 60°C, 5 hours at 70°C, 5 hours at 90°C and 5 hours at 110°C under vacuum.
- a third step wherein the crystals thus obtained were mixed with NH₄Br under an inert, dry atmosphere of nitrogen gas.
Amounts of CsBr, CsEuBr₃ and NH₄Br used in the experiments (in weight - grams - and in molar amounts - moles - as well as molar ratios CsBr/EuBr₃ and NH₄Br/EuBr₃ have been set out in Table 1.

The crystals or crystal mixtures thus obtained were subjected to a firing cycle following a temperature program as summarised in Table 2. In that Table it has been indicated what kind of atmosphere the prefiring and firing processes were performed, i.e. an argon or a nitrogen atmosphere at a temperature below 350°C, or an argon or a nitrogen atmosphere at a temperature, whether or not in the presence of reducing amounts of hydrogen above 350°C.

**Table 1**

| | 3102/03/1 | 5F | 3102/04/1 |
|---|---|---|---|
| Weight (g) CsBr | 3.56 | 7.632 | 3.49 |
| Weight (g) EuBr₃ | 6.56 | 14.047 | 6.43 |
| Weight (g) NH₄Br | 0 | 10.5 | 5 |
| Moles CsBr | 0.017 | 0.0360 | 0.016 |
| Moles of EuBr₃ | 0.017 | 0.0358 | 0.016 |
| Moles of NH₄Br | 0 | 0.1071 | 0.051 |
| Mol ratio CsBr/ EuBr₃ | 1 | 1 | 1 |
| Mol ratio NH₄Br/ EuBr₃ | 0 | 3 | 3 |

**Table 2**

| | 3102/03/1 | 5F | 3102/04/1 |
|---|---|---|---|
| Temp. program | 1h at 110°C | From 110°C to 130°C; 1h at 130°C | 1h at 110°C |
| | Up to 130°C; 1 h at 130°C | Up to 180°C; 1 h at 180°C | Up to 130°C; 1 h at 130°C |
| | Up to 180°C; 1 h at 180°C | Up to 350°C; 1 h at 350°C | Up to 180°C; 1 h at 180°C |
| | Up to 350°C; 1 h at 350°C | Up to 400°C; 1 h at 400°C | Up to 350°C; 1 h at 350°C |
| | Up to 600°C; 5 h at 600°C | Up to 500°C; 1 h at 500°C | Up to 600°C; 1 h at 600°C |
| | | Up to 600°C; 1 h at 600°C | |
| | All temp. increases 1°C/min. | All temp. increases 1°C/min. | All temp. increases 1°C/min. |
| Gas atm. T<350°C | N₂ | Ar | N₂ |
| Gas atm. T>350°C | N₂ | **H₂** | N₂ |

In Table 3 the results obtained from a thermographic analysis (TGA-plot) were summarised: more particularly it has been indicated therein if an eutecticum (eutectic mixture of CsBr and CsEuBr₃) was present or not and, if so, at what temperature that eutecticum was observed.

**Table 3**

| | 3102/03/1 | 5F | 3102/04/1 |
|---|---|---|---|
| TGA CsBr/ CsEuBr₃ | 524°C | No eutecticum | No eutecticum |
| Melting point CsEuBr₃ | 681°C | 760°C | 742°C |

In Table 4 results of an X-ray diffraction analysis (intensities at differing "2 thèta"-angles, characteristic for the CsEuBr₃ phase (at 30.4; 37.4 and 43.8° angles) and characteristic for the EuOBr phase (at 32.0; 56.5 and 57.5° angles) respectively, have been summarised.

**Table 4**

| XRD (2θ) analysis | 3102/03/1 | 5F | 3102/04/1 |
|---|---|---|---|
| CsEuBr₃ | | | |
| 30.4° | 1100 | 2450 | 5000 |
| 37.4° | 800 | 1050 | 4600 |
| 43.8° | 600 | 2500 | 3500 |

| EuOBr | | | |
|---|---|---|---|
| 32.0° | 6000 | 0 | 3300 |
| 56.5° | 1100 | 0 | 700 |
| 57.5° | 2000 | 0 | 900 |

As becomes clear from the Examples, the experimental data of which have been set out hereinbefore in a synthesis wherein 50 mole% of CsBr and 50 mole% of EuBr₃ have reacted and wherein a complete reduction of trivalent to divalent europium occurs, it is expected that no or very limited amounts of EuOBr become generated.

If however some EuOBr appears, X-ray diffraction (XRD) analysis unambiguously shows a higher intensity peak at diffraction angle 2θ=32°, characteristic for presence of EuOBr, whereas a lowering of intensity peaks at diffraction angles 2θ=30.4°, 2θ=37.4° and 2θ=43.8°, characteristic for CsEuBr₃ is observed.

Same conclusions can be drawn from the thermographic analysis (TGA): if EuOBr is formed, part of CsBr salt, stoechiometrically added to EuBr₃, cannot react with reduced EuBr₂ in order to provide CsEuBr₃ perovskites as mix crystals. CsBr not present in the perovskite mix crystals as a consequence of its failure to react to CsEuBr₃ thus remains present as a separate CsBr phase.

If such a separate CsBr phase is present besides CsEuBr₃ a CsBr/CsEuBr₃ eutecticum appears at 530°C in the thermographic analysis curve. The more EuOBr as an impurity is formed, the higher this eutecticum endotherm is present in the TGA. In the opposite case, as desired however, absence of an eutecticum endotherm is indicative for the absence, or, at least, presence in minor amounts, of undesired EuOBr.

Having described in detail preferred embodiments of the current invention, it will now be apparent to those skilled in the art that numerous modifications can be made therein without departing from the scope of the invention as defined in the appending claims.

## Claims

1. Method for producing precursor compounds suitable for use in the production of europium doped cesium halide photostimulable phosphors, **characterised in that** at least one of the steps essentially makes use of an ammonium halide salt.

2. Method according to claim 1, wherein besides the steps of mixing a cesium halide salt with a trivalent europium halide salt in a homogenising step, followed by drying a solution thereof under vacuum evaporation in order to form a powdery composition, the following step essentially makes use of an ammonium halide salt in that mixing said powdery composition proceeds with an excess of an ammonium halide salt, before heating said mixture, following a dedicate temperature profile in a dedicate atmosphere before cooling said precursor compounds.

3. Method according to claim 1 or 2, wherein said precursor compounds having as a composition CsₓEu_{y}X'_{x+αy}, wherein x/y > 0.25, wherein α ≥ 2 and wherein X' is a halide selected from the group consisting of Cl, Br and I and combinations.

4. Method according to claim 3, wherein said method proceeds by the steps of
- mixing CsX with EuX₃ in a homogenising step, followed by adding demineralised water, wherein X is a halide selected from the group consisting of Cl, Br and I and combinations thereof;
- drying said solution under vacuum evaporation to a powdery composition;
- mixing said powdery composition with NH₄X', wherein X' is a halide selected from the group consisting of Cl, Br and I and combinations thereof;
- heating said mixture while following a dedicate temperature profile comprising at least one or more step(s) changing temperature up to 350 °C, and one or more step(s) further increasing said temperature above 350 °C; wherein at least said step(s) up to 350 °C are performed in an inert atmosphere;
- cooling said mixture.

5. Method according to claim 4 , wherein heating said mixture above 350°C proceeds in a reducing atmosphere.

6. Method according to claim 5, wherein said reducing atmosphere is a hydrogen containing inert atmosphere.

7. Method according to any one of the claims 4 to 6, wherein said inert atmosphere is an argon or a nitrogen atmosphere.

8. Method according to any one of the claims 2 to 7, wherein CsX and EuX₃ are present in equimolar amounts.

9. Method according to any one of the claims 2 to 7, wherein ammonium halide salts and cesium halide salts are present in molar ratios exceeding 1.5:1.

10. Method according to any one of the claims 1 to 9, comprising the step of recovering a CsX':Eu phosphor, wherein X' is a halide selected from the group consisting of Cl, Br and I and combinations thereof.

11. Method according to any one of the claims 1 to 10, wherein in the raw mix between 10⁻³ and 25 mol % of europium is present with respect total cesium amounts.

12. Method according to any one of the claims 1 to 10, wherein in the raw mix between 10⁻³ and 10 mol % of europium is present with respect to total cesium amounts.

13. Method according to any one of the claims 1 to 10, wherein the raw mix is present in only one crucible and wherein in the said raw mix between 10⁻³ and 5 mol % of europium is present with respect to total cesium amounts.

14. Method according to any one of the claims 1 to 10, wherein the raw mix is present in at least two crucibles, wherein in the raw mix in at least one crucible between 10⁻³ and 80 mol % of europium is present with respect to total cesium amounts.

15. Method according to claim 13 or 14, wherein said crucible(s) is(are) part of (a) crucible unit(s).

16. Method for producing a binderless phosphor screen or panel comprising the steps of providing a CsX:Eu phosphor prepared according to the method according to any one of the claims 1 to 15, and depositing said phosphor on a substrate by a method selected from the group consisting of physical vapour deposition, chemical vapour deposition and an atomisation technique.

17. A method for producing a binderless phosphor screen or panel on a substrate containing a CsX:Eu stimulable phosphor,
wherein X represents a halide selected from the group consisting of Br, Cl and combinations thereof, said method comprising the steps of:
- bringing in a deposition chamber, evacuated to 1 mbar or less and further adding an inert gas thereto, together with said substrate, multiple heatable containers containing CsX and a precursor compound or a combination of precursor compounds having as a composition CsₓEu_{y}X'_{x+αy}, prepared according to a method according to any one of the claims 1 to 15,
- further depositing on said substrate, by a method selected from the group consisting of physical vapour deposition, chemical vapour deposition and an atomisation technique, said CsX:Eu stimulable phosphor,
wherein said precursor compound or a combination of precursor compounds having as a composition CsₓEu_{y}X'_{x+3y} or CsₓEu_{y}X'_{x+2y} is present in such a ratio to CsX that on said substrate a CsX:Eu storage phosphor is formed, wherein Eu is present as a dopant in an amount between 10⁻⁵ and 5 mol%.
